# EUROPEAN PATENT SPECIFICATION

(11) **EP 3 010 051 B1**
(45) Date of publication and mention of the grant of the patent: **08.01.2020**
(21) Application number: 14810788.1
(22) Date of filing: 10.06.2014
(51) Int. Cl.: H01L 33/48, C04B 35/115, G02B 5/02

(54) **WINDOW MATERIAL FOR ULTRAVIOLET-RAY-EMITTING ELEMENT AND METHOD FOR PRODUCING SAME**
FENSTERMATERIAL FÜR ELEMENT ZUR EMITTIERUNG ULTRAVIOLETTER STRAHLEN UND VERFAHREN ZUR HERSTELLUNG DAVON
MATÉRIAU DE FENÊTRE POUR ÉLÉMENT D'ÉMISSION DE RAYONS ULTRAVIOLETS ET PROCÉDÉ DE PRODUCTION ASSOCIÉ

(30) Priority: 12.06.2013 JP 2013123466
(43) Date of publication of application: 20.04.2016
(73) Proprietor: NGK Insulators, Ltd., Nagoya-shi, Aichi 467-8530 (JP)
(72) Inventor: NOMURA Masaru, Nagoya-shi Aichi 467-8530 (JP); OHASHI Tsuneaki, Nagoya-shi Aichi 467-8530 (JP); MIYAZAWA Sugio, Nagoya-shi Aichi 467-8530 (JP)
(74) Representative: TBK
(86) International application number: PCT/JP2014/065317
(87) International publication number: WO 2014/199975

(56) References cited:
- EP-A1- 2 978 009
- EP-A2- 2 305 621
- JP-A- H1 072 684
- JP-A- H03 285 865
- JP-A- 2002 289 925
- JP-A- 2007 043 487
- JP-A- 2007 324 220
- JP-A- 2012 238 654

## Description

### Technical Field

The present invention relates to a window material for an ultraviolet light emitting device (ultraviolet-ray-emitting element), a method for producing the same, and a use of the same, the window material having an excellent transmittance of an ultraviolet light from an ultraviolet light emitting device for emitting an ultraviolet light having a wavelength of 300 nm or less, such as a light emitting diode, a laser diode, a discharge lamp, or the like.

### Background Art

Ultraviolet lights have been used for various purposes depending on the wavelengths. Particularly, an ultraviolet light having a wavelength within a region of 280 nm or less, which is called UV-C, exhibits a high disinfecting capability, and therefore has been used for bacterial disinfection or eradication (see JP 2008 091623 A).

An ultraviolet light emitting device is known as one of the light sources for emitting an ultraviolet light. The ultraviolet light emitting device is covered with a window material of a light transmitting material for protecting the device. A glass material is conventionally used as the light transmitting material for the ultraviolet light emitting device, and is composed of a high-silica glass (quartz) or the like in view of productivity, cost, and strength (see JP 2000 349348 A).

Meanwhile, the ultraviolet light emitting device is broken or deteriorated at a high temperature. Therefore, the ultraviolet light emitting device is required to be capable of efficiently releasing its heat to improve the emission efficiently (see JP 2002 289925 A).

In other fields, it is known to use a translucent alumina material instead of the quartz. Among others, the translucent alumina material has been used to provide a wiring board including a translucent alumina substrate having a smooth surface and a rough surface on one side thereof, and a wiring pattern formed on the rough surface but not the smooth surface (see JP 2012 238654 A). There is also known an alumina ceramics having the features specified in the preamble of claim 1 (see JP H03 285865 A).

### Summary of Invention

As described above, the quartz has been used as the window material for the ultraviolet light emitting device. However, the quartz has a low thermal conductivity of approximately 1 W/m·K, and cannot efficiently release the heat of the device. Therefore, the ultraviolet light emitting device using the quartz is likely to have a high temperature and to be broken or deteriorated.

Furthermore, the quartz exhibits a lower front total light transmittance of a shorter wavelength light. Particularly, the quartz exhibits a significantly low front total light transmittance of a light having a wavelength of 300 nm or less.

In view of the above problems, an object of the present invention is to provide a window material, which has a high thermal conductivity, exhibits a high transmittance of an ultraviolet light having a wavelength of 300 nm or less, and is suitable for use in an ultraviolet light emitting device, and a method for producing the window material.
[1] A window material for an ultraviolet light emitting device for emitting an ultraviolet light having a wavelength of 300 nm or less, according to a first aspect of the present invention, has the features defined in claim 1.
[2] In the first aspect of the present invention, the window material may contain a substrate that has a plate shape with a thickness of 2.0 mm or less and has the one surface and the other surface facing the one surface. The thickness may be 1.5 mm or less, or 1.0 mm or less. The thickness is preferably 0.5 mm or less, more preferably 0.3 mm or less.
[3] In this case, the one surface may be a surface from which ultraviolet light outgoes, and the other surface may be a surface into which ultraviolet light enters.
[4] A production method according to a second aspect of the present invention has the features defined in claim 4.
[5] In the second aspect of the present invention, for example, the one surface or the other surface of the substrate may be subjected to a mirror polishing or grinding treatment. Alternatively, a green body to be processed into the substrate may be prepared by the gel casting process or the tape casting process, and then sintered while contacting different types of setters respectively with one surface and the other surface of the green body.
[6] Alternatively, the method may include the step of mirror-polishing the one surface of the substrate to obtain the surface roughness Ra of 0.03 µm or less, and the step of increasing a surface roughness of the other surface of the substrate. In this step, at least the other surface of the substrate may be ground. Alternatively, in the sintering of the green body, one of the setters that is in contact with the other surface of the green body may have a surface roughness larger than that of another setter that is in contact with the one surface, and thus the other surface of the substrate may have a larger surface roughness. Then, the one surface of the substrate may be mirror-polished to obtain the surface roughness Ra of 0.03 µm or less.
[7] A third aspect of the present invention is directed to a use of the window material as defined in claim 6.

The window material of the present invention can exhibit a high transmittance of an ultraviolet light having a wavelength of 300 nm or less, and can be suitable for use in the ultraviolet light emitting device. Furthermore, the translucent alumina substrate has a high thermal conductivity of 30 W/m·K or more, and thus can efficiently release heat generated in operation of the ultraviolet light emitting device. Consequently, the window material can prevent the ultraviolet light emitting device from being broken or deteriorated due to temperature rise.

Furthermore, the method of the present invention is capable of easily producing the window material, which can exhibit a high transmittance of an ultraviolet light having a wavelength of 300 nm or less and can efficiently release heat generated in operation of the ultraviolet light emitting device.

### Brief Description of Drawings

FIG. 1 is a cross-sectional view of a window material for an ultraviolet light emitting device according to an embodiment of the present invention;
FIG. 2A is a process chart of a first production method for producing the window material for the ultraviolet light emitting device, and FIG. 2B is a process chart of a second production method;
FIG. 3A is a process chart of a third production method for producing the window material for the ultraviolet light emitting device, and FIG. 3B is a process chart of a fourth production method;
FIG. 4A is a process chart of a fifth production method for producing the window material for the ultraviolet light emitting device, and FIG. 4B is a process chart of a sixth production method;
FIG. 5 is a process chart of a seventh production method for producing the window material for the ultraviolet light emitting device; and
FIG. 6 is an explanatory view for illustrating a method for evaluating front total light transmittance in Examples 1 to 6 and Comparative Examples 1 to 3.

### Description of Embodiments

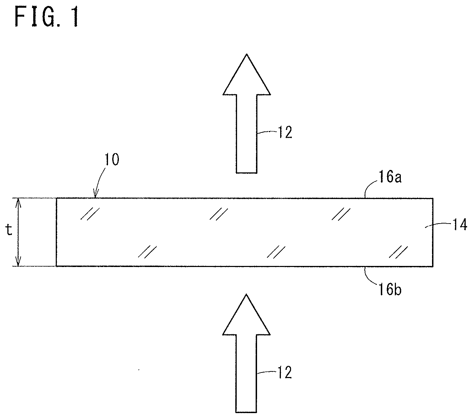

Several embodiment examples of a window material for an ultraviolet light emitting device and a production method therefor according to the present invention will be described below with reference to FIGS. 1 to 6. It should be noted that, in this description, a numeric range of "A to B" includes both the numeric values A and B respectively as the lower limit and upper limit values.

As shown in FIG. 1, a window material for an ultraviolet light emitting device, according to an embodiment of the present invention, (hereinafter referred to simply as the window material 10) exhibits a high transmittance of an ultraviolet light 12 having a wavelength of 300 nm or less emitted from an ultraviolet light emitting device (not shown).

The window material 10 contains an alumina substrate (a translucent alumina substrate 14).

The translucent alumina substrate 14 has a plate shape with a thickness t of 0.3 mm or less, and has a surface from which the ultraviolet light 12 outgoes (the light outgoing surface 16a: one surface), and a surface into which the ultraviolet light 12 enters (the light entering surface 16b: the other surface) disposed face-to-face with the light outgoing surface 16a. For example, the planar shapes of the surfaces may be selected from triangular shapes, rectangular shapes, square shapes, circular shapes, elliptical shapes, polygonal shapes, and the like depending on a shape of a case to which the ultraviolet light emitting device is mounted.

The average grain diameter of the surface of the translucent alumina substrate 14 is 6 to 60 µm, preferably 6 to 20 µm. The average grain diameter of the surface was measured as follows. A portion was selected at random in the surface and observed by an optical microscope at 200-fold magnification, and the number of the crystals located on a 0.7-mm line segment was counted. Then, a value obtained by multiplying 0.7 by 4/π was divided by the counted crystal number to obtain the average grain diameter.

In particular, in the translucent alumina substrate 14 according to this embodiment, the light outgoing surface 16a and the light entering surface 16b have different surface roughnesses. Specifically, the light outgoing surface 16a has a surface roughness Ra (arithmetic average roughness) of 0.03 µm or less, and the light entering surface 16b has a surface roughness Ra of 0.2 to 0.6 µm.

A process for preparing the translucent alumina substrate 14 is not particularly limited, and may be any process such as a doctor blade process (a tape casting process), an extrusion process, or a gel casting process. The process for preparing the translucent alumina substrate 14 is preferably a gel casting process or a tape casting process, particularly preferably a gel casting process.

In a preferred embodiment, a slurry, which contains a starting material powder (ceramic powder) including an alumina powder, a dispersion medium, and a gelling agent, is cast into a mold and then converted to a gel to prepare a green body. The green body is sintered to obtain the translucent alumina substrate 14 (see JP 2001 335371 A).

The starting material is particularly preferably prepared by adding 150 to 1000 ppm of an auxiliary agent to a high-purity alumina powder having a purity of 99.9% or more (preferably 99.95% or more). Examples of such high-purity alumina powders include those available from Taimei Chemicals Co., Ltd. The auxiliary agent is preferably magnesium oxide, and examples thereof further include ZrO₂, Y₂O₃, La₂O₃, and ScO₃.

The gel casting processes include the following processes.
(1) An inorganic substance powder, a gelling agent of a prepolymer such as a polyvinyl alcohol, an epoxy resin, a phenol resin, etc., and a dispersing agent are dispersed in a dispersion medium to prepare a slurry. Then, the slurry is cast into a mold, and thereafter is three-dimensionally crosslinked by a crosslinking agent, whereby the slurry gelates and solidifies.
(2) A slurry is solidified by chemically bonding an organic dispersion medium having a reactive functional group and a gelling agent. This process is disclosed in JP 2001 335371 A by the present applicant.

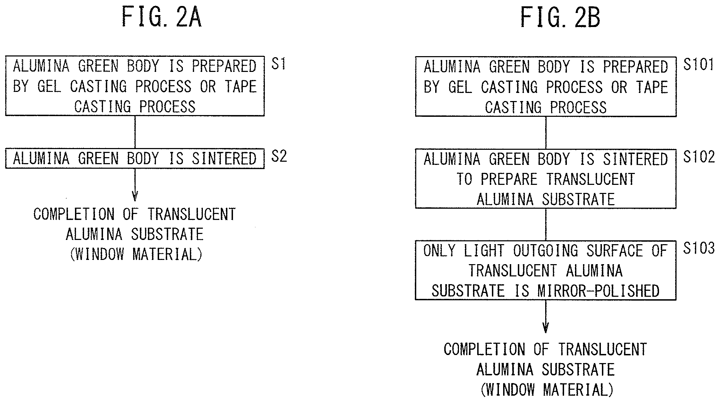

Several production methods (first to seventh production methods) for producing the window material 10 (the translucent alumina substrate 14) will be described below with reference to the process charts of FIGS. 2A to 5. Please note that only some of the first to seventh production methods produce the claimed surface roughnesses.

In the first production method, in Step S1 in FIG. 2A, a slurry, which contains a starting material powder including an alumina powder, a dispersion medium, and a gelling agent, is cast into a mold and then hardened to prepare an alumina green body. Alternatively, the slurry may be formed into a tape-shape by a doctor blade and then hardened to prepare an alumina green body.

Then, in Step S2, the alumina green body is sintered to produce the translucent alumina substrate 14 having a thickness of 0.3 mm or less, i.e. the window material 10.

In the second production method, in Step S101 in FIG. 2B, an alumina green body is prepared in the same manner as Step S1.

In Step S102, the alumina green body is sintered to prepare the translucent alumina substrate 14 having a thickness of more than 0.3 mm.

Then, in Step S103, only the light outgoing surface 16a of the translucent alumina substrate 14 is mirror-polished, whereby the surface roughness Ra is reduced to 0.03 µm or less, to produce the translucent alumina substrate 14 having a thickness of 0.3 mm or less, i.e. the window material 10.

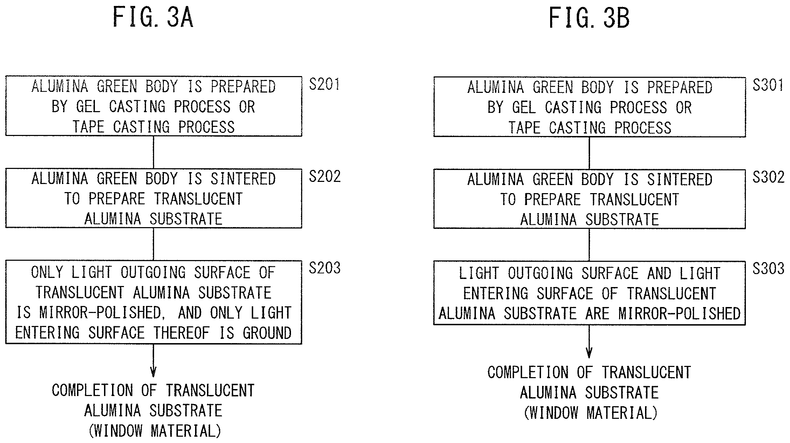

In the third production method, in Step S201 in FIG. 3A, an alumina green body is prepared in the same manner as Step S1.

In Step S202, the alumina green body is sintered to prepare the translucent alumina substrate 14 having a thickness of more than 0.3 mm.

Then, in Step S203, only the light outgoing surface 16a of the translucent alumina substrate 14 is mirror-polished, whereby the surface roughness Ra is reduced to 0.03 µm or less. Furthermore, only the light entering surface 16b of the translucent alumina substrate 14 is ground such that the surface roughness Ra falls within a range of 0.2 to 0.6 µm, to produce the translucent alumina substrate 14 having a thickness of 0.3 mm or less, i.e. the window material 10.

The following process may be carried out instead of the above treatment of grinding the light entering surface 16b of the translucent alumina substrate 14. That is, the following setters are used in the sintering of the alumina green body in Step S202. One of the setters that is in contact with the other surface of the alumina green body (corresponding to the light entering surface) has a surface roughness larger than that of the other setter that is in contact with the one surface (corresponding to the light outgoing surface). Thus, the surface roughness Ra of the light entering surface 16b of the translucent alumina substrate 14 is controlled within a range of 0.2 to 0.6 µm by the sintering process. Then, only the light outgoing surface 16a of the translucent alumina substrate 14 is mirror-polished to obtain a surface roughness Ra of 0.03 µm or less.

In the fourth production method, in Step S301 in FIG. 3B, an alumina green body is prepared in the same manner as Step S1.

In Step S302, the alumina green body is sintered to prepare the translucent alumina substrate 14 having a thickness of more than 0.3 mm.

Then, in Step S303, the light outgoing surface 16a and the light entering surface 16b of the translucent alumina substrate 14 are both mirror-polished, whereby the surface roughnesses Ra are reduced to 0.03 µm or less, to produce the translucent alumina substrate 14 having a thickness of 0.3 mm or less, i.e. the window material 10.

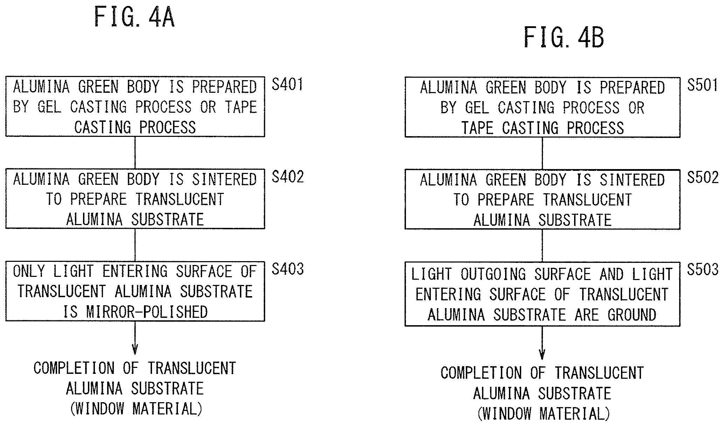

In the fifth production method, in Step S401 in FIG. 4A, an alumina green body is prepared in the same manner as Step S1.

In Step S402, the alumina green body is sintered to prepare the translucent alumina substrate 14 having a thickness of more than 0.3 mm.

Then, in Step S403, only the light entering surface 16b of the translucent alumina substrate 14 is mirror-polished, whereby the surface roughness Ra is reduced to 0.03 µm or less, to produce the translucent alumina substrate 14 having a thickness of 0.3 mm or less, i.e. the window material 10.

In the sixth production method, in Step S501 in FIG. 4B, an alumina green body is prepared in the same manner as Step S1.

In Step S502, the alumina green body is sintered to prepare the translucent alumina substrate 14 having a thickness of more than 0.3 mm.

Then, in Step S503, the light outgoing surface 16a and the light entering surface 16b of the translucent alumina substrate 14 are both ground, whereby the surface roughnesses Ra are controlled within a range of 0.2 to 0.6 µm, to produce the translucent alumina substrate 14 having a thickness of 0.3 mm or less, i.e. the window material 10.

The following process may be carried out instead of the above treatment of grinding the light outgoing surface 16a and the light entering surface 16b of the translucent alumina substrate 14. That is, in the sintering of the alumina green body in Step S502, setters having a large surface roughness are brought into contact with the one surface and the other surface of the alumina green body.
The setters may be of different types. Thus, the surface roughnesses Ra of the light outgoing surface 16a and the light entering surface 16b of the translucent alumina substrate 14 are controlled within a range of 0.2 to 0.6 µm by the sintering process. The light outgoing surface 16a and the light entering surface 16b may have the same or different surface roughnesses.

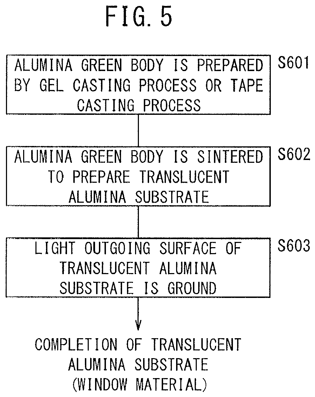

In the seventh production method, in Step S601 in FIG. 5, an alumina green body is prepared in the same manner as Step S1.

In Step S602, the alumina green body is sintered to prepare the translucent alumina substrate 14 having a thickness of more than 0.3 mm.

Then, in Step S603, the light outgoing surface 16a of the translucent alumina substrate 14 is ground, whereby the surface roughness Ra is controlled within a range of 0.2 to 0.6 µm, to produce the translucent alumina substrate 14 having a thickness of 0.3 mm or less, i.e. the window material 10.

The following process may be carried out instead of the above treatment of grinding the light outgoing surface 16a of the translucent alumina substrate 14. That is, the following setters are used in the sintering of the alumina green body in Step S602. One of the setters that is in contact with the one surface of the alumina green body (corresponding to the light outgoing surface) has a surface roughness larger than that of the other setter that is in contact with the other surface (corresponding to the light entering surface). Thus, the surface roughness Ra of the light outgoing surface 16a of the translucent alumina substrate 14 is controlled within a range of 0.2 to 0.6 µm by the sintering process.

As described above, in the window material 10 of this embodiment, the translucent alumina substrate 14 is used, and the average grain diameter of the surface is controlled within a range of 6 to 60 µm, preferably 6 to 20 µm. As a result, the window material 10 can exhibit a high transmittance of ultraviolet light having a wavelength of 300 nm or less, and can be suitably used in the ultraviolet light emitting device. Furthermore, the translucent alumina substrate 14 has a high thermal conductivity of 30 W/m·K or more. Therefore, the window material 10 can efficiently release heat generated in operation of the ultraviolet light emitting device to thereby prevent the device from being broken or deteriorated due to temperature rise.

### Examples

In Examples 1 to 6 and Comparative Examples 1 to 3, surface roughness measurement and transmittance evaluation were carried out. Details and evaluation results of Examples 1 to 6 and Comparative Examples 1 to 3 are shown in Tables 1 to 3 to be hereinafter described. Please note that only some of Examples 1 to 6 have the claimed surface roughnesses.

### <Surface Roughness>

Surface roughnesses of light outgoing surfaces and light entering surfaces in measurement samples (of Examples 1 to 6 and Comparative Examples 1 to 3) were measured by using a laser microscope (VK-9700 available from Keyence Corporation) at 500-fold magnification.

### <Transmittance Evaluation>

Transmittances were evaluated with respect to front total light transmittances. Specifically, average transmittances within a measurement wavelength region of 200 to 280 nm and transmittances at a particular wavelength of 210 nm were evaluated. The evaluation wavelength region was selected because UV-C has a wavelength of 280 nm or less, and a light having a wavelength of 200 nm or less is generally absorbed in the air, and thus is a measurement limit of a measurement apparatus. Furthermore, because more significant effects are obtained at a shorter wavelength in Examples, the wavelength of 210 nm was selected as the particular wavelength for the evaluation and the transmittances at the particular wavelength of 210 nm were also used as evaluation values.

### [Front Total Light Transmittance]

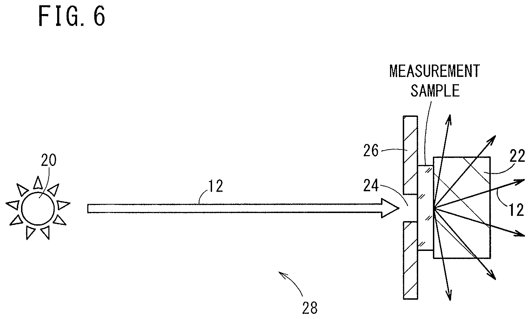

As shown in FIG. 6, a spectrophotometer 28 having a light source 20 and a detector 22 (U-4100 available from Hitachi High-Technologies Corporation) was used for measuring front total light transmittances. A slit plate 26 having one through-hole 24 (with a diameter of 3 mm) was placed between the light source 20 and the detector 22. A measurement sample (according to each of Examples 1 to 6 and Comparative Examples 1 to 3) was fixed to a surface of the slit plate 26 that faces the detector 22 in such a manner that the through-hole 24 was covered with the measurement sample. In this measurement, the light entering surface of the measurement sample was fixed to the slit plate 26. That is, the measurement sample was fixed such that the light entering surface faced the light source 20 and the light outgoing surface faced the detector 22. Although the spectrophotometer 28 was capable of measurement in a wavelength region of 175 to 2600 nm, a light source that is capable of emitting an ultraviolet light 12 having a wavelength of 200 to 280 nm was used as the light source 20.

The ultraviolet light 12 having a wavelength of 200 to 280 nm was emitted from the light source 20 to the light entering surface of the measurement sample fixed to the slit plate 26. The ultraviolet light 12 transmitted through the measurement sample and exiting the light outgoing surface was detected by the detector 22.

The front total light transmittance was calculated from the ratio (I/I₀) of the intensity (I) of the ultraviolet light 12 transmitted through the measurement sample to the intensity (I₀) of the ultraviolet light 12 measured without the fixed measurement sample.

### (Example 1)

According to the first production method shown in FIG. 2A, a slurry containing a ceramic powder, a dispersion medium, and a gelling agent was cast into a mold. The slurry was converted to a gel to prepare an alumina green body, and the alumina green body was sintered to obtain a translucent alumina substrate 14 of Example 1.

Specifically, 500 ppm of a magnesium oxide powder was added to a high-purity alumina powder having a purity of 99.99% or more, a BET surface area of 9 to 15 m²/g, and a tap density of 0.9 to 1.0 g/cm³. The starting material powder was formed by a gel casting process. 100 parts by weight of this powder, 40 parts by weight of a dispersion medium (dimethyl malonate), 8 parts by weight of a gelling agent (modified 4,4'-diphenylmethane diisocyanate), 0.1 to 0.3 parts by weight of a reaction catalyst (triethylamine), and a nonionic dispersing agent were mixed.

The slurry was prepared at 20°C by the steps of dispersing the starting material powder and the dispersing agent in the dispersion medium, dispersing the gelling agent therein, and then adding the reaction catalyst thereto. The slurry was cast into the mold and left for 2 hours to prepare the gel. The gelled alumina green body was released from the mold and dried at 60°C to 100°C. Then, the green body was degreased at 1100°C for 2 hours and sintered in a hydrogen atmosphere.

The translucent alumina substrate 14 had a thickness t of 0.3 mm and had a surface with an average grain diameter of 20 µm. Both of the light outgoing surface 16a and the light entering surface 16b had the same surface roughness Ra of 0.3 µm.

The front total light transmittance of the translucent alumina substrate 14 was measured. As a result, the translucent alumina substrate 14 exhibited an average transmittance of 89% in the wavelength region of 200 to 280 nm, and exhibited a transmittance of 90% at a wavelength of 210 nm.

### (Example 2)

A translucent alumina substrate 14 of Example 2 was produced in the same manner as Example 1 except that the average grain diameter of the alumina powder (or the sintering temperature or the sintering time) was changed. The translucent alumina substrate 14 had a thickness t of 0.3 mm and had a surface with an average grain diameter of 12 µm. Both of the light outgoing surface 16a and the light entering surface 16b had the same surface roughness Ra of 0.2 µm. The front total light transmittance of the translucent alumina substrate 14 was measured. As a result, the translucent alumina substrate 14 exhibited an average transmittance of 90% in the wavelength region of 200 to 280 nm, and exhibited a transmittance of 95% at a wavelength of 210 nm.

### (Example 3)

According to the second production method shown in FIG. 2B, a translucent alumina substrate 14 of Example 3 was produced. First, a translucent alumina substrate 14 having a thickness of 0.5 mm was prepared in the same manner as Example 1. Then, only the light outgoing surface 16a of the translucent alumina substrate 14 was mirror-polished to produce the translucent alumina substrate 14 of Example 3 having a thickness of 0.3 mm. Before the mirror polishing, the surface of the translucent alumina substrate 14 had an average grain diameter of 20 µm, and both of the light outgoing surface 16a and the light entering surface 16b had the same surface roughness Ra of 0.3 µm. After the mirror polishing, the light outgoing surface 16a of the translucent alumina substrate 14 had a surface roughness Ra of 0.03 µm. The front total light transmittance of the translucent alumina substrate 14 was measured. As a result, the translucent alumina substrate 14 exhibited an average transmittance of 91% in the wavelength region of 200 to 280 nm, and exhibited a transmittance of 96% at a wavelength of 210 nm.

### (Example 4)

According to the third production method shown in FIG. 3A, a translucent alumina substrate 14 of Example 4 was produced. Specifically, first, a translucent alumina substrate 14 having a thickness of 0.5 mm was prepared in the same manner as Example 1. Then, only the light outgoing surface 16a of the translucent alumina substrate 14 was mirror-polished, and only the light entering surface 16b was ground by a grinding stone (subjected to a surface roughening treatment for roughening the surface), to produce the translucent alumina substrate 14 of Example 4 having a thickness of 0.3 mm. Before the mirror polishing and the surface roughening treatment, the surface of the translucent alumina substrate 14 had an average grain diameter of 20 µm. After the mirror polishing and the surface roughening treatment, the light outgoing surface 16a of the translucent alumina substrate 14 had a surface roughness Ra of 0.03 µm, and the light entering surface 16b had a surface roughness Ra of 0.6 µm. The front total light transmittance of the translucent alumina substrate 14 was measured. As a result, the translucent alumina substrate 14 exhibited an average transmittance of 92% in the wavelength region of 200 to 280 nm, and exhibited a transmittance of 97% at a wavelength of 210 nm.

### (Example 5)

According to the fourth production method shown in FIG. 3B, a translucent alumina substrate 14 of Example 5 was produced. Specifically, first, a translucent alumina substrate 14 having a thickness of 0.5 mm was prepared in the same manner as Example 1. Then, the light outgoing surface 16a and the light entering surface 16b of the translucent alumina substrate 14 were each mirror-polished, to produce the translucent alumina substrate 14 of Example 5 having a thickness of 0.3 mm. Before the mirror polishing, the surface of the translucent alumina substrate 14 had an average grain diameter of 20 µm. After the mirror polishing, both of the light outgoing surface 16a and the light entering surface 16b of the translucent alumina substrate 14 had the same surface roughness Ra of 0.03 µm. The front total light transmittance of the translucent alumina substrate 14 was measured. As a result, the translucent alumina substrate 14 exhibited an average transmittance of 83% in the wavelength region of 200 to 280 nm, and exhibited a transmittance of 84% at a wavelength of 210 nm.

### (Example 6)

According to the fifth production method shown in FIG. 4A, a translucent alumina substrate 14 of Example 6 was produced. Specifically, first, a translucent alumina substrate 14 having a thickness of 0.5 mm was prepared in the same manner as Example 1. Then, contrary to Example 3, only the light entering surface 16b of the translucent alumina substrate 14 was mirror-polished to produce the translucent alumina substrate 14 of Example 6 having a thickness of 0.3 mm. Before the mirror polishing, the surface of the translucent alumina substrate 14 had an average grain diameter of 20 µm, and both of the light outgoing surface 16a and the light entering surface 16b had the same surface roughness Ra of 0.3 µm. After the mirror polishing, the light entering surface 16b of the translucent alumina substrate 14 had a surface roughness Ra of 0.03 µm. The front total light transmittance of the translucent alumina substrate 14 was measured. As a result, the translucent alumina substrate 14 exhibited an average transmittance of 87% in the wavelength region of 200 to 280 nm, and exhibited a transmittance of 91% at a wavelength of 210 nm.

### (Comparative Example 1)

The front total light transmittance of a quartz substrate having a diameter of 20 mm and a thickness of 0.5 mm was measured. As a result, the quartz substrate exhibited an average transmittance of 88% in the wavelength region of 200 to 280 nm, and exhibited a transmittance of 86% at a wavelength of 210 nm.

### (Comparative Example 2)

A translucent alumina substrate 14 of Comparative Example 2 was produced in the same manner as Example 1 except that the average grain diameter of the alumina powder (or the sintering temperature or the sintering time) was changed. The translucent alumina substrate 14 had a thickness t of 0.3 mm and had a surface with an average grain diameter of 5 µm. Both of the light outgoing surface 16a and the light entering surface 16b had the same surface roughness Ra of 0.1 µm. The front total light transmittance of the translucent alumina substrate 14 was measured. As a result, the translucent alumina substrate 14 exhibited an average transmittance of 67% in the wavelength region of 200 to 280 nm, and exhibited a transmittance of 68% at a wavelength of 210 nm.

### (Comparative Example 3)

A translucent alumina substrate 14 of Comparative Example 3 was produced in the same manner as Example 1 except that the average grain diameter of the alumina powder (or the sintering temperature or the sintering time) was changed. The translucent alumina substrate 14 had a thickness t of 0.3 mm and had a surface with an average grain diameter of 65 µm. As a result of observing the sintered translucent alumina substrate 14, a crack was found. Therefore, the surface roughness and the front total light transmittance could not be measured.

**Table 1**

| | | Ex. 1 | Ex. 2 | Ex. 3 |
|---|---|---|---|---|
| Material | | Translucent alumina | | |
| Average grain diameter of surface (µm) | | 20 | 12 | 20 |
| Surface treatment | Light entering surface | Not performed | Not performed | Not performed |
| | Light outgoing surface | Not performed | Not performed | Mirror polished |
| Surface roughness (µm) | Light entering surface | 0.3 | 0.2 | 0.3 |
| | Light outgoing surface | 0.3 | 0.2 | 0.03 |
| Front total light transmittance (%) | Average in 200 to 280 nm | 89 | 90 | 91 |
| | At 210 nm | 90 | 95 | 96 |

**Table 2**

| | | Ex. 4 | Ex. 5 | Ex. 6 |
|---|---|---|---|---|
| Material | | Translucent alumina | | |
| Averaqe grain diameter of surface (µm) | | 20 | 20 | 20 |
| Surface treatment | Light entering surface | Ground | Mirror polished | Mirror polished |
| | Light outgoing surface | Mirror polished | Mirror polished | Not performed |
| Surface roughness (µm) | Light entering surface | 0.6 | 0.03 | 0.03 |
| | Light outgoing surface | 0.03 | 0.03 | 0.3 |
| Front total light transmittance (%) | Average in 200 to 280 nm | 92 | 83 | 87 |
| | At 210 nm | 97 | 84 | 91 |

**Table 3**

| | | Comp. Ex. 1 | Comp. Ex. 2 | Comp. Ex. 3 |
|---|---|---|---|---|
| Material | | Quartz | Translucent alumina | |
| Average grain diameter of surface (µm) | | - | 5 | 65 |
| Surface treatment | Light entering surface | - | Not performed | Not performed |
| | Light outgoing surface | - | Not performed | Not performed |
| Surface roughness (µm) | Light entering surface | - | 0.1 | - |
| | Light outgoing surface | - | 0.1 | - |
| Front total light transmittance (%) | Average in 200 to 280 nm | 88 | 67 | Cracked |
| | At 210 nm | 86 | 68 | Cracked |

As is clear from Tables 1 to 3, it is preferred that the window material 10 contains a material of a translucent alumina and the surface has an average grain diameter of 6 to 60 µm. The quartz of Comparative Example 1 exhibits more excellent front total light transmittance evaluation results as compared with Example 5. However, the quartz has a low thermal conductivity of approximately 1 W/m·K and cannot release heat efficiently. Consequently, the ultraviolet light emitting device containing the quartz is likely to be broken or deteriorated due to temperature rise disadvantageously.

In Examples 1 to 6, excellent evaluation results were achieved. As is clear from the results of Examples 1, 2, and 5, it is preferred that when the light outgoing surface and light entering surface of the translucent alumina substrate have the same surface roughness, the surfaces should not be mirror-polished.

Furthermore, as is clear from the excellent evaluation results of Examples 3 and 4, it is further preferred that the light outgoing surface and the light entering surface of the translucent alumina substrate should have different surface roughnesses, and it is particularly preferred that the light outgoing surface should have a surface roughness Ra of 0.03 µm or less and the light entering surface should have a surface roughness Ra of 0.2 to 0.6 µm.

It is to be understood that the window material and the production method of the present invention are not limited to the above embodiments, and various changes and modifications may be made therein without departing from the scope of the present invention.

## Claims

1. A window material (10) for an ultraviolet light emitting device for emitting an ultraviolet light (12) having a wavelength of 300 nm or less, wherein
the window material (10) contains translucent alumina, and
a surface of the window material (10) has an average grain diameter of 6 to 60 µm,
**characterized in that**
one surface (16a) of the window material (10) has a surface roughness Ra of 0.03 µm or less, and another surface (16b) of the window material (10), which faces the one surface (16a), has a surface roughness Ra of 0.2 to 0.6 µm.

2. The window material (10) according to claim 1, wherein
the window material (10) comprises a substrate (14), and
the substrate (14) has a plate shape with a thickness (t) of 2.0 mm or less, and has the one surface (16a) and the other surface (16b).

3. The window material (10) according to claim 1 or 2, wherein
the one surface (16a) is a surface from which the ultraviolet light (12) outgoes, and
the other surface (16b) is a surface into which the ultraviolet light (12) enters.

4. A method for producing the window material (10) according to claim 1 or 2, the method comprising:
a step of performing a gel casting process or a tape casting process to prepare an alumina green body; and
a step of sintering the alumina green body to produce the window material (10) comprising a substrate (14) which contains the translucent alumina and has the one surface (16a) and the other surface (16b), wherein
an average grain diameter of the surface of the window material (10) is 6 to 60 µm, the one surface (16a) has a surface roughness Ra of 0.03 µm or less, and the other surface (16b) has a surface roughness Ra of 0.2 to 0.6 µm.

5. The method according to claim 4, further comprising steps of:
mirror-polishing the one surface (16a) to obtain the surface roughness Ra of 0.03 µm or less; and
increasing a surface roughness of the other surface (16b).

6. Use of the window material (10) according to any one of claims 1 to 3 in an ultraviolet light emitting device for emitting an ultraviolet light (12) having a wavelength of 300 nm or less, wherein
the window material (10) is mounted on at least an ultraviolet light emitting side of the ultraviolet light emitting device.

## Patentansprüche

1. Fenstermaterial (10) für eine ultraviolettes Licht emittierende Vorrichtung zum Emittieren eines ultravioletten Lichts (12), das eine Wellenlänge von 300 nm oder weniger hat, wobei
das Fenstermaterial (10) transluzentes Aluminiumoxid enthält und
eine Oberfläche des Fenstermaterials (10) einen mittleren Korndurchmesser von 6 bis 60 µm hat,
**dadurch gekennzeichnet, dass**
eine Oberfläche (16a) des Fenstermaterials (10) eine Oberflächenrauheit Ra von 0,03 µm oder weniger hat und eine andere Oberfläche (16b) des Fenstermaterials (10), die der einen Oberfläche (16a) gegenüberliegt, eine Oberflächenrauheit Ra von 0,2 bis 0,6 µm hat.

2. Fenstermaterial (10) nach Anspruch 1, wobei
das Fenstermaterial (10) ein Substrat (14) umfasst und
das Substrat (14) eine Plattenform mit einer Dicke (t) von 2,0 mm oder weniger hat und die eine Oberfläche (16a) und die andere Oberfläche (16b) hat.

3. Fenstermaterial (10) nach Anspruch 1 oder 2, wobei
die eine Oberfläche (16a) eine Oberfläche ist, aus der das ultraviolette Licht (12) austritt, und
die andere Oberfläche (16b) eine Oberfläche ist, in die das ultraviolette Licht (12) eintritt.

4. Verfahren zur Herstellung des Fenstermaterials (10) nach Anspruch 1 oder 2, wobei das Verfahren Folgendes umfasst:
einen Schritt, in dem ein Gelgussvorgang oder ein Bandgussvorgang durchgeführt wird, um einen Aluminiumoxid-Grünkörper anzufertigen; und
einen Schritt, in dem der Aluminiumoxid-Grünkörper gesintert wird, um das Fenstermaterial (10) herzustellen, das ein Substrat (14) umfasst, welches das transluzente Aluminiumoxid enthält und die eine Oberfläche (16a) und die andere Oberfläche (16b) hat, wobei
ein mittlerer Korndurchmesser der Oberfläche des Fenstermaterials (10) 6 bis 60 µm beträgt, die eine Oberfläche (16a) eine Oberflächenrauheit Ra von 0,03 µm oder weniger hat und die andere Oberfläche (16b) eine Oberflächenrauheit Ra von 0,2 bis 0,6 µm hat.

5. Verfahren nach Anspruch 4, mit außerdem folgenden Schritten:
Hochglanzpolieren der einen Oberfläche (16a), um die Oberflächenrauheit Ra von 0,03 µm oder weniger zu erzielen; und
Erhöhen einer Oberflächenrauheit der anderen Oberfläche (16b).

6. Verwendung des Fenstermaterials (10) nach einem der Ansprüche 1 bis 3 in einer ultraviolettes Licht emittierenden Vorrichtung zum Emittieren eines ultravioletten Lichts (12), das eine Wellenlänge von 300 nm oder weniger hat, wobei
das Fenstermaterial (10) auf zumindest einer ultraviolettes Licht emittierenden Seite der ultraviolettes Licht emittierenden Vorrichtung montiert ist.

## Revendications

1. Matériau de fenêtre (10) pour un dispositif luminescent ultraviolet pour émettre une lumière ultraviolette (12) ayant une longueur d'onde de 300 nm ou moins, dans lequel
le matériau de fenêtre (10) contient de l'alumine translucide, et
une surface du matériau de fenêtre (10) a un diamètre de grain moyen de 6 à 60 µm,
**caractérisé en ce que**
une première surface (16a) du matériau de fenêtre (10) a une rugosité de surface Ra de 0,03 µm ou moins, et une autre surface (16b) du matériau de fenêtre (10), qui fait face à la première surface (16a), a une rugosité de surface Ra de 0,2 à 0,6 µm.

2. Matériau de fenêtre (10) selon la revendication 1, dans lequel
le matériau de fenêtre (10) comprend un substrat (14), et
le substrat (14) a une forme de plaque avec une épaisseur (t) de 2,0 mm ou moins, et a la première surface (16a) et l'autre surface (16b).

3. Matériau de fenêtre (10) selon la revendication 1 ou 2, dans lequel
la première surface (16a) est une surface de laquelle la lumière ultraviolette (12) sort, et
l'autre surface (16b) est une surface dans laquelle la lumière ultraviolette (12) entre.

4. Procédé pour produire le matériau de fenêtre (10) selon la revendication 1 ou 2, le procédé comprenant :
une étape de mise en œuvre d'un traitement de coulée en gel ou d'un traitement de coulée en bande pour préparer un corps cru en alumine ; et
une étape de frittage du corps cru en alumine pour produire le matériau de fenêtre (10) comprenant un substrat (14) qui contient l'alumine translucide et a la première surface (16a) et l'autre surface (16b), dans lequel
le diamètre de grain moyen de la surface du matériau de fenêtre (10) est de 6 à 60 µm, la première surface (16a) a une rugosité de surface Ra de 0,03 µm ou moins, et l'autre surface (16b) a une rugosité de surface Ra de 0,2 à 0,6 µm.

5. Procédé selon la revendication 4, comprenant en outre les étapes suivantes :
polissage miroir de la première surface (16a) pour que soit obtenue une rugosité de surface Ra de 0,03 µm ou moins ; et
augmentation de la rugosité de surface de l'autre surface (16b) .

6. Utilisation du matériau de fenêtre (10) selon l'une quelconque des revendications 1 à 3 dans un dispositif luminescent ultraviolet pour émettre une lumière ultraviolette (12) ayant une longueur d'onde de 300 nm ou moins, dans laquelle
le matériau de fenêtre (10) est monté sur au moins un côté luminescent ultraviolet du dispositif luminescent ultraviolet.
